# EUROPEAN PATENT APPLICATION

(11) **EP 1 477 655 A1**
(43) Date of publication of application: **17.11.2004**
(21) Application number: 04010280.8
(22) Date of filing: 30.04.2004
(51) Int. Cl.: F02D 41/14, F02D 41/24, F01N 3/20

(54) **Process for controlled addition of a reducing agent into nitrogen oxides containing exhaust gas**

(30) Priority: 13.05.2003 DK 200300723
(71) Applicant: Haldor Topsoe A/S, 2800 Kgs. Lyngby (DK)
(72) Inventor: Gabrielsson, Pär L.T., 25438 Helsingborg (SE); Bjorn, Ingvard, 2900 Hellerup (DK)

(57) **Abstract**

Process for controlled addition of a reducing agent into nitrogen oxides containing exhaust gas being contacted with a selective reducing catalyst for abatement of the nitrogen oxides by reaction with the reducing agent in contact with the catalyst, comprising the steps of
determining mass flow of combustion air passed to the engine;
determining concentration of nitrogen oxides in the exhaust gas prior to contact with the catalyst;
determining temperature of the exhaust gas at inlet of the catalyst;
determining temperature of the exhaust gas at outlet of the catalyst; and
communicating determined values of the air mass flow, the nitrogen oxides concentration and the inlet and outlet temperature to an electronic control unit using a serial interface and calculating amount of reducing agent to be injected into the exhaust gas prior to contact with the catalyst.

## Description

The present invention relates to reduction of content of nitrogen oxides (NOx) by means of selective catalytic reduction with injection of reducing agents onboard vehicles with internal combustion engines.

Reduction of NOx from internal combustion engines is conventionally performed through selective catalytic reduction (SCR). In the SCR ammonia or urea act as a reducing agent. When adsorbed on a catalytic surface, the reducing agent reacts with nitrogen oxides from the exhaust to form nitrogen and water. Ammonia or urea is added to the exhaust gas from an external source either as in aqueous solution or as urea as a solid or dissolved in water. If urea is used, it will be thermally decomposed to ammonia and isocyanic acid by the heat in the exhaust or hydrolysed over the SCR catalyst to form carbon dioxide and ammonia.

Commonly used V₂O5-WO₃/TiO₂ catalysts are employed in the SCR process even though other base metal oxides have SCR activity.

An electronic control unit (ECU) is usually employed to meter urea or ammonia reducing agent injection, which must correspond to the potential of the catalyst to reduce NOx. The reduction capability depends on the activity of the catalyst, the temperature of the exhaust, the massflow of the exhaust and the NOx concentration in the exhaust. The oxygen content and the water content of the exhaust affects the reduction capability but are considered to have a minor effect. The most important parameters like exhaust mass flow, NOx concentration and catalyst temperature are in the known methods and systems for NOx control in exhaust from diesel fueled engines determined by the means of sensors, arranged in the exhaust gas channel of the engine.

The measured data are then transmitted to the ECU, where the data are converted to an appropriate output signal by means of an algorithm to a metering pump for the controlled injection of reducing agent into the exhaust gas stream.

In the known systems data from the sensors are transmitted to the ECU in an analogous manner, which makes them vulnerable towards electromagnetic disturbances induced by the electrical field on the vehicle. It is thus required to arrange the ECU in a close distance to the sensors to limit electromagnetic scrambling of sensor data.

Limitations with respect to location of the ECU in relation to the sensors represent a serious problem in particular in retrofitting existing vehicles with a system for NOx reduction comprising sensors and an ECU. In Nox reduction systems of the above kind it will furthermore be difficult to arrange the ECU in the vehicle when for instance engine data which have to be monitored by sensors in the engine compartment are utilised in controlling reducing agent injection.

It is thus the general object of this invention to provide an improvement in the known systems and methods for controlled addition of a reducing agent in particular with respect to transmission of sensor data.

Accordingly, the invention is an improved method for controlled addition of a reducing agent into nitrogen oxides containing vehicle engine exhaust gas by reaction of the nitrogen oxides with a reducing agent in contact with a selective reducing catalyst amount of the reducing agent being added to the exhaust gas is metered on base of exhaust gas values and/or engine values, which values are determined by means of sensors and sensor data being communicated to an electronic control unit for metering the amount of the reducing agent being added to the exhaust gas, the improvement of which comprises communicating the sensor data by means of a serial interface to the electronic control unit.

The invention provides furthermore an improved system for metering a reducing agent into nitrogen oxides containing exhaust gas for catalytic reduction of the nitrogen oxides, which system is useful for operating the inventive method.

The essential feature of the method and system according to the invention is transmission of sensor data with a serial interface to the electronic control unit (ECU), whereby electromagnetic disturbances induced by electrical field on the vehicle are avoided. The sensors are equipped with the serial interface, which makes it possible to arrange the ECU in a remote position from the sensors.

As further an advantage, an ECU being equipped with a serial interface instead of a circuit for measurements of analogue signals from the sensors allows monitoring of the air flow transmitted by a serial interface mounted directly on or in close connection to air flow sensors, which could be placed in the engine compartment.

For carrying out the inventive process, it will be necessary to monitor at least one of nitrogen oxide concentration, exhaust gas temperature at inlet of the reducing catalyst and exhaust gas temperature at outlet of the reducing catalyst. It is furthermore preferred to determine certain engine operation values, in particular flow amount of engine intake air.

Measured values of the intake airflow to the engine and oxygen content in the exhaust allows calculating the exhaust mass flow. From the oxygen content in the exhaust and the inlet airflow, the fuel consumption is derived. The fuel consumption, as a molar flow, is then added to the engine inlet air molar flow giving the exhaust molar flow. By knowing an average molar weight of the exhaust gas, the exhaust gas massflow can be calculated with accuracy accurate enough for this application.

Determination of exhaust massflow by calculation as described above is based on data measured by low cost sensors for intake airflow and for oxygen concentration instead of use of expensive exhaust gas flow sensors arranged in the exhaust gas channel as typically applied in prior art.

The NOx mass flow is calculated by the ECU based on data of the NOx concentration in the exhaust gas upstream the catalyst and the point for urea injection, transmitted from a NOx sensor or other analyser. For the same reasons like for the airflow sensor, the NOx sensor is equipped with a serial interface, preferable a Controller Area Network, CAN interface, able to communicate with the electronic control unit via a serial link.

CANbus was originally developed by Bosch for automotive applications. It is a high speed serial data network engineered to exist in harsh electrical environments. It answers also a lot of the issues of predictability and latency in its basic design - by using non-destructive priority based message arbitration.

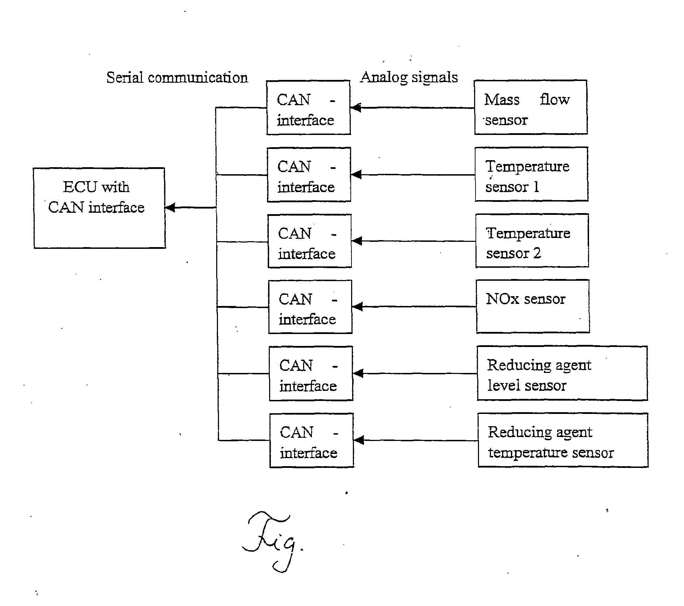

In order to foresee the NOx reduction potential of the catalyst the temperature in the exhaust has to be measured. For the same reasons like for the airflow sensor, the temperature sensors could be equipped with a serial interface, preferable a CAN interface, able to communicate with the electronic control unit via a serial link as schematically shown in the attached Figure.

## Claims

1. Improved process for controlled addition of a reducing agent into nitrogen oxides containing vehicle engine exhaust gas by reaction of nitrogen oxides with a reducing agent in contact with a selective reducing catalyst amount of the reducing agent being added to the exhaust gas is metered on base of exhaust gas values and/or engine values, which values are determined by means of sensors and sensor data being communicated to an electronic control unit for metering the amount of the reducing agent being added to the exhaust gas, the improvement of which comprises communicating the sensor data by means of a serial interface to the electronic control unit.

2. Process of claim 1, wherein the reducing agent contains or is urea and/or ammonia.

3. Process of claim 1, wherein the exhaust gas values being determined are at least one of nitrogen oxide concentration, exhaust gas temperature at inlet the reducing catalyst, exhaust gas temperature at outlet of the reducing catalyst and oxygen content in the exhaust gas.

4. Process of claim 1, wherein the engine values comprise flow amount of engine intake air.

5. Process of claim 1, wherein the electronic control unit is arranged in the vehicle engine compartment.

6. Process of claim 1, wherein the electronic control unit is an existing unit for controlling operation of the engine.

7. System for controlled addition of a reducing agent into nitrogen oxides containing vehicle engine exhaust gas comprising at least a sensor for providing data on exhaust gas composition and condition and/or a sensor for engine operation, and an electronic control unit for processing of the data and for metering the addition of the reducing agent into the exhaust gas, wherein the sensors are equipped with a serial interface for transmission of sensor data to the electronic control unit.
